# EUROPÄISCHE PATENTANMELDUNG

(11) **EP 0 859 087 A1**
(43) Veröffentlichungstag der Anmeldung: **19.08.1998**
(21) Anmeldenummer: 97120898.8
(22) Anmeldetag: 28.11.1997
(51) Int. Cl.: E02B 15/04

(54) **Schwimmfähige Öl- oder Chemikaliensperre**

(30) Priorität: 12.02.1997 DE 29702395 U
(71) Anmelder: Riensch & Held (GmbH & Co.), 21035 Hamburg (DE)
(72) Erfinder: von Hobe, Edgar, 21035 Hamburg (DE); Migeon, Michel, 1000 Brüssel (BE)
(74) Vertreter: von Raffay, Vincenz, Dipl.-Ing.

(57) **Zusammenfassung**

Die schwimmfähige Öl- oder Chemikaliensperre wird durch eine in Gebrauchslage senkrecht im Wasser stehende Sperrfolie (1) gebildet, die im oberen Bereich einen in Längsrichtung verlaufenden Hohlraum (9) zur Aufnahme eines Schlauches mit einer Vielzahl von Luftkammern (2) aufweist, von denen mehrere zum Aufblasen durch eine Einlaßöffnung (6) miteinander verbunden, aber durch Rückschlag- oder Rückstauventile (8) voneinander getrennt sind. In vorteilhafter Weise wird die Verbindung zwischen den Luftkammern (2) und die Rückschlagventile durch ein Labyrinth (8) gebildet, das die Luft in Einblasrichtung hindurchläßt, eine Rückströmung aber verhindert. Erfindungsgemäß gelangt ein Schlauch zum Einsatz, der wie eine Verpackungsfolie praktisch endlos hergestellt werden kann und eine Vielzahl nebeneinanderliegender, bereits abgeschweißter Luftkammern aufweist. Hierbei handelt es sich um einen preiswerten Massenartikel. Die Luftkammern sind zwar miteinander verbunden, so daß sie von einer Einlaßöffnung aufgepumpt werden können. Nach dem Aufpumpen ist aber eine Rückströmung von der einen in die andere Kammer nicht mehr möglich. Wenn eine Kammer beschädigt wird, werden die anderen Kammern hiervon nicht beeinflußt. Die schwimmfähige Sperre bildet einen preiswerten, auch als Einwegartikel einsetzbaren Gegenstand, der leicht ist und daher schnell zum Einsatz transportiert werden kann.

## Beschreibung

Die Erfindung betrifft eine schwimmfähige Öl- oder Chemikalienperre.

Derartige Sperren sind in den unterschiedlichsten Ausgestaltungen bekannt. Sie weisen eine senkrecht im Wasser stehende Folie oder Wand auf, die undurchlässig für Öl oder andere schwimmende Chemikalien und Verunreinigungen ist und in dem verunreinigten Wasser schwimmt und durch ein Schiff geschleppt werden kann. Die bekannten Öl- oder Chemikaliensperren sind aufwendig und schwer handhabbar. Sie müssen, um wirtschaftlich eingesetzt werden zu können, wiederverwendet werden. Dieses bedeutet eine aufwendige Reinigung nach dem Einsatz. Durch ihr großes Gewicht ist die Handhabung schwierig.

Der Erfindung liegt die Aufgabe zugrunde, eine schwimmfähige Öl- oder Chemikaliensperre zu schaffen, die kostengünstig als Einwegprodukt eingesetzt und leicht entsorgt werden kann und dabei eine einfache Handhabung ermöglicht.

Diese Aufgabe wird grundsätzlich durch das Kennzeichen des Anspruches 1 gelöst. In vorteilhafter Weise ist die Öl- oder Chemikaliensperre so ausgebildet, wie in Anspruch 2 wiedergegeben.

Erfindungsgemäß wird eine aufblasbare Verpackungsfolie verwendet, um den eigentlichen Auftriebskörper zu bilden. Diese Verpackungsfolie ist aus der WO 93/04947 bekannt. Diese Verpackungsfolie, die praktisch endlos hergestellt werden kann, weist einen Schlauch mit einer Vielzahl nebeneinanderliegender bereits abgeschweißter Luftkammern auf. Diese Luftkammern sind miteinander derart verbunden, daß mehrere von einer Einlaßöffnung aufgepumpt werden können, daß nach dem Aufpumpen aber eine Rückströmung von der einen Luftkammer in die andere nicht möglich ist (Rückstauventil). Wenn eine Kammer beschädigt wird, werden die anderen Kammern davon nicht beeinflußt. Wieviele derartige Kammern eine solche Einheit bilden, die von einer Einlaßöffnung aufgeblasen, nach dem Aufblasen aber voneinander getrennt sind, ist eine Frage der Anwendung. Der Luftkammerschlauch befindet sich in dem Hohlraum, der durch die Sperrfolie gebildet wird. Hierdurch wird der Luftkammerschlauch gleichzeitig gestützt und gehalten.

Wenn die Öl- oder Chemikaliensperre so ausgebildet ist, wie in Anspruch 2 angegeben, dann verhindert das aus der WO 93/04947 bekannte Labyrinth eine Rückströmung. Das Labyrinth bildet einerseits die Verbindung zwischen den Luftkammern, andererseits auch das Rückschlagventil.

Durch Verwendung des an sich bekannten Luftkammerschlauches in Verbindung mit einer stabilen Sperr- oder Schutzfolie, wird ein relativ leichtes und gut zu handhabendes Produkt geschaffen. Dieses kann nach einem Einsatz durch Verbrennen oder dergleichen entsorgt werden, da es kostengünstig hergestellt werden kann. Die Sperre nach der Erfindung kann insgesamt als Einwegartikel konzipiert sein. In diesem Falle ist sie besonders leicht.

In Gebrauchslage im unteren Bereich, d.h. unterhalb des Hohlraumes sind vorzugsweise mehrere parallel zu dem Hohlraum verlaufende Schleppseile vorgesehen (Ansprüche 4 und 5), die einerseits für eine Versteifung in diesem Bereich sorgen, aber auch die notwendige Beschwerung bilden, so daß die Sperre in Gebrauchslage im Wasser senkrecht steht und eine entsprechende Tiefe abdeckt. Gleichzeitig können die Enden der Schleppseile nicht nur mit einem Schleppfahrzeug, sondern auch mit den Schleppseilen einer sich anschließenden weiteren Sperre verbunden werden. Zu diesem Zweck sind entsprechende Verbindungselemente wie Ösen und beispielsweise Karabinerhaken vorgesehen (Anspruch 6).

Die Sperrfolien selbst werden in vorteilhafter Weise beim Verbinden von mehreren Sperren durch quer zur Längsrichtung aufschiebbare Schienen formschlüssig miteinander verbunden (Anspruch 7).

In dem in Gebrauchslage unteren Bereich unterhalb des Hohlraumes, d.h. dort, wo sich die Schleppseile befinden, sind Öffnungen vorgesehen, die in den Bereich zwischen der doppellagigen Sperrfolie führen und durch die Wasser eindringen kann, so daß die Sperre in Gebrauchslage, d.h. wenn sie senkrecht im Wasser steht, stabilisiert wird.

Schließlich ist es möglich, die schwimmfähige Sperre insgesamt durch Zick-Zack-Faltung oder durch Aufrollen in einem Behälter anzuordnen, der vorzugsweise schwimmfähig ist (Anspruch 9).

Im folgenden wird die Erfindung unter Hinweis auf die Zeichnung zweier Ausführungsbeispieles näher erläutert.

Es zeigt:
- Fig. 1: eine Seitenansicht auf einen Abschnitt einer ersten Ausführungsform einer Öl- oder Chemikaliensperre in Gebrauchslage;

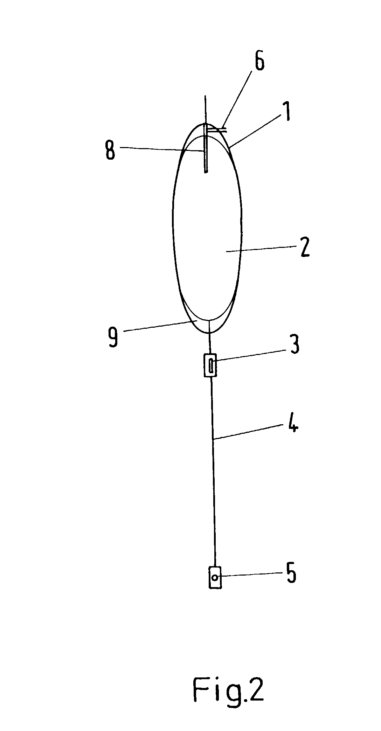

- Fig. 2: einen Schnitt durch die Darstellung der Fig. 1;
- Fig. 3: eine perspektivische Ansicht einer in Zick-Zack-Form zusammengefalteten Öl- oder Chemikaliensperre nach der Erfindung, angeordnet in einem schwimmfähigen Behälter;
- Fig. 4: eine der Fig. 1 entsprechende Seitenansicht, jedoch einer anderen Ausführungsform;
- Fig. 5: eine schematische, perspektivische Ansicht der Ausführungsform nach Fig. 4;
- Fig. 6: eine Einzelheit einer Seitenansicht zweier miteinander verbundener Öl- oder Chemikaliensperren;
- Fig. 7: einen Querschnitt durch die Darstellung der Fig. 6 im vergrößertem Maßstab; und
- Fig. 8: eine perspektivische Ansicht einer aufgerollten Öl- oder Chemikaliensperre nach der Erfindung, angeordnet in einem Behälter.

Die in der Zeichnung dargestellte schwimmfähige Öl- oder Chemikaliensperre besteht aus einer äußeren Sperr- oder Schutzfolie 1, die im oberen Bereich einen Hohlraum 9 bildet, der im Querschnitt ungefähr ellipsenförmig ist. In diesem Hohlraum 9 ist ein Schlauch mit einer Vielzahl von Luftkammern 2 angeordnet, der sich grundsätzlich in dem Hohlraum frei entfalten kann. Durch die Einlaßventile ist er fixiert.

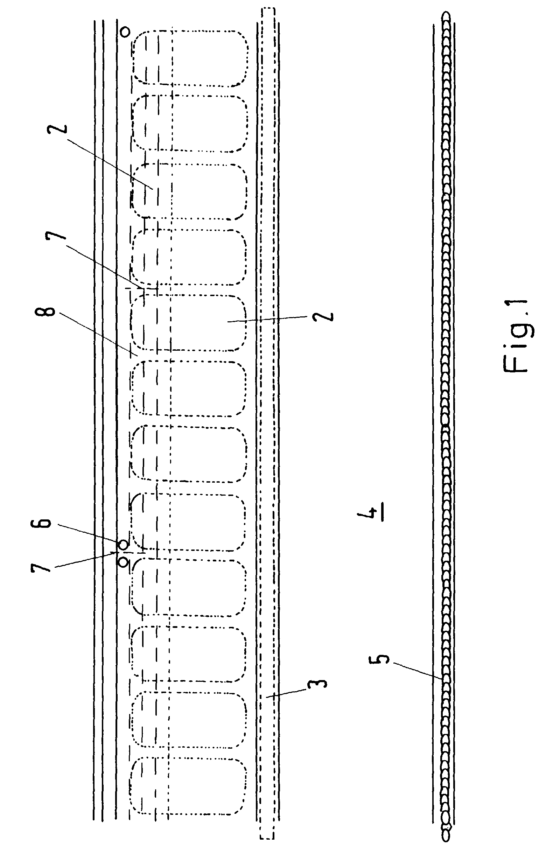

Die einzelnen Luftkammern 2 liegen in Längsrichtung nebeneinander, wie es der Fig. 1 zu entnehmen ist. Jeweils eine Gruppe von Luftkammern 2 - bei der in Fig. 1 dargestellten Ausführungsform sind es vier - bilden eine Aufblaseinheit. Der an sich durchgehende Luftkanal 8 ist jeweils (bei 7) zwischen zwei Einlaßöffnungen 6 unterbrochen. Von einer Einlaßöffnung 6 können bei dieser Ausführungsform vier Luftkammern aufgeblasen werden. Eine Rückströmung von der einen Luftkammer in die andere nach dem Füllen wird durch die Labyrinthausbildung verhindert. Der in jeder Luftkammer 2 anstehende Druck wirkt so auf den Luftkanal 8, daß dieser durch Zusammendrücken geschlossen wird und eine Rückströmung nicht möglich ist. Selbstverständlich können auch mehr oder weniger Luftkammern 2 eine Einheit bilden.

Der Luftkammerschlauch ist leicht und großtechnisch preiswert herzustellen. Er wird in dem Hohlraum der Sperrfolie 1 angeordnet und durch diese geschützt. Wenn eine Luftkammer beschädigt wird, so behalten die anderen ihren Druck.

Unterhalb (bei 4) des Hohlraumes, der den Luftkammerschlauch aufnimmt, befindet sich ein Schleppgurt 3 in einem entsprechend ausgebildeten Kanal. Der Schleppgurt ist zweckmäßigerweise am Anfang und am Ende mit einer Metallöse zur Befestigung eines Schleppseils ausgerüstet. Auch liegt der Verpackung eine dritte Befestigung lose bei, die an beliebiger Stelle des Gurtes befestigt werden kann, um die Sperre gegebenenfalls an 3 Punkten zu befestigen und damit beispielsweise auf Binnengewässern/Flüssen einen Keil zu bilden. Hier könnte die Sperre auch als stehende Sperre in fließenden Gewässern eingesetzt werden. Ein Schwert 4 sorgt dafür, daß auch unterhalb der Wasseroberfläche treibendes Öl, Chemikalien oder Verschmutzungen mit zurückgehalten werden. Unten ist eine Beschwerung 5 in Form einer durchgehenden Metallkette oder anderem Material ebenfalls in einem Kanal vorgesehen.

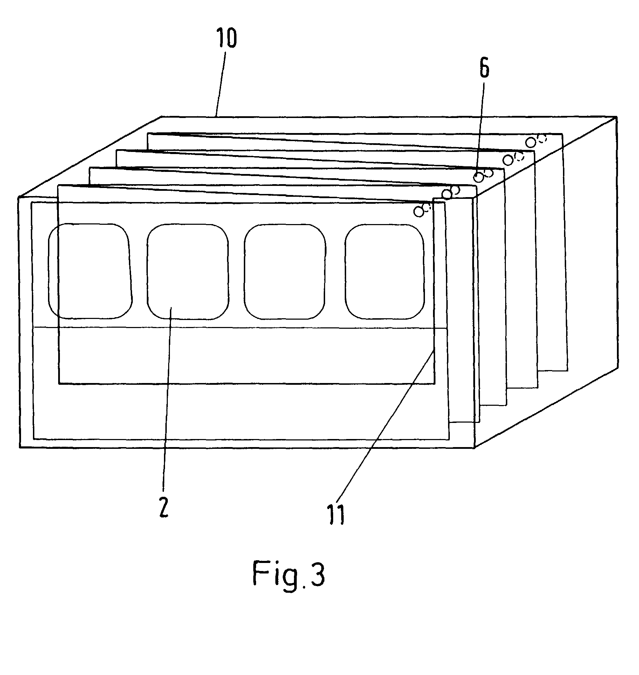

Im Vergleich zu bekannten Öl- oder Chemikaliensperren ist die erfindungsgemäße Öl- oder Chemikaliensperre leicht und sie läßt sich zu einer kompakten Einheit in Nichtgebrauchslage zick-zack-förmig zusammenfalten, so wie es in Fig. 3 dargestellt ist. Das Falten erfolgt immer pro Einheit - bei dieser Ausführungsform gebildet durch jeweils vier Luftkammern 2 -, so daß die Einlaßöffnungen auf einer Seite liegen. Angeordnet wird die zusammengefaltete Öl- oder Chemikaliensperre in einem schwimmfähigen Behälter 10 mit einem oberen Deckel (nicht gezeigt) und einer vorderen Austrittsöffnung 11.

Im Einsatzfall kann der Behälter 10 mit der Öl- oder Chemikaliensperre, die beispielsweise eine Länge von 100 Metern hat, an den Einsatzort transportiert werden. Dort kann der schwimmfähige Behälter auf die Wasseroberfläche abgesetzt werden. Der Deckel wird entfernt und die Austrittsöffnung wird ebenfalls freigegeben. Durch das Aufblasen an den einzelnen Einlaßöffnungen 6 vergrößert sich das Volumen erheblich und die entsprechend aufgeblasene Einheit springt aus der Austrittsöffnung bis die gesamte Öl- oder Chemikaliensperre auf der Wasseroberfläche schwimmt und entsprechend zum Einsatzort transportiert und durch ein Schiff oder dergleichen bewegt werden kann. Aufgeblasen wird die Folie durch einen herkömmlichen Kompressor. Nach einem Einsatz kann die Öl- oder Chemikaliensperre durch Verbrennen entsorgt werden. Der Transport der nun verschmutzten Öl- oder Chemikaliensperre zur Verbrennungsanstalt soll in dem gleichen Behälter erfolgen, wobei die Luftkammern vorher mit einem spitzen Gegenstand zu zerstechen sind.

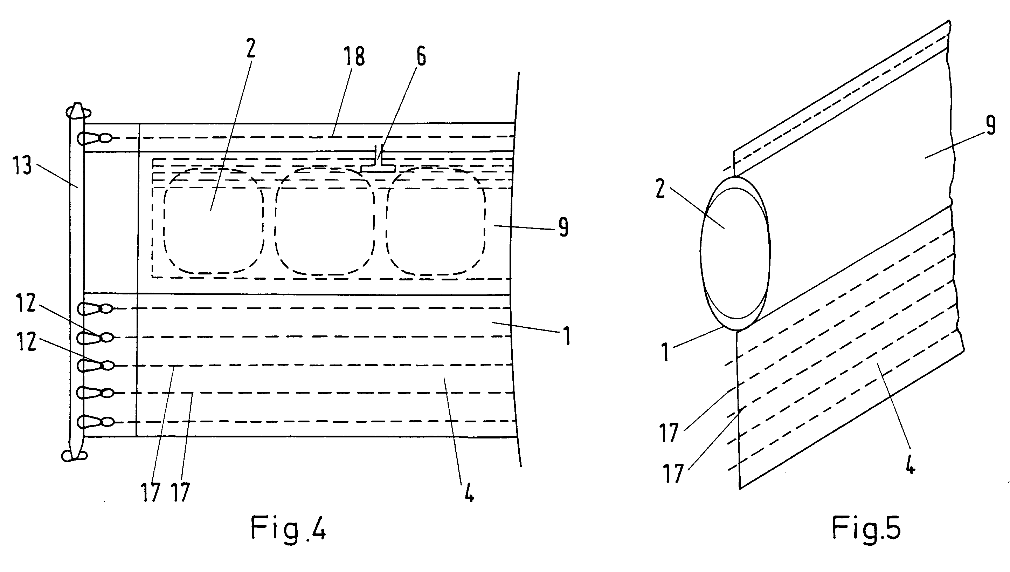

In den Fig. 4 bis 8 ist eine andere Ausführungsform einer schwimmfähigen Sperre nach der Erfindung dargestellt. Anstelle eines Schleppgurtes 3 und einer die Beschwerung bildenden Kette 5 sind bei dieser Ausführungsform mehrere Schleppseile 17 vorgesehen, die parallel zu dem Hohlraum 9 in dem unteren Bereich der Sperrfolie 1 verlaufen, dort, wo diese doppelwandig ausgebildet ist. Durch Schweißen sind Kanäle gebildet, in denen die Schleppseile 17 verlaufen. An den Enden der Schleppseile befinden sich Ösen, in die Karabinerhaken 12 eingehakt sind.

Das obenliegende Topseil ist bei dieser Ausführungsform mit 18 bezeichnet. Die Einlaßöffnung liegt in der Mitte zwischen jeweils sechs oder vier Luftkammern 2, so daß eine entsprechende Anzahl von Luftkammern von einer Einlaßöffnung aufgepumpt werden können. Dann tritt die Rückstauwirkung ein, so daß eine Luftströmung in die entgegengesetzte Richtung nicht möglich ist.

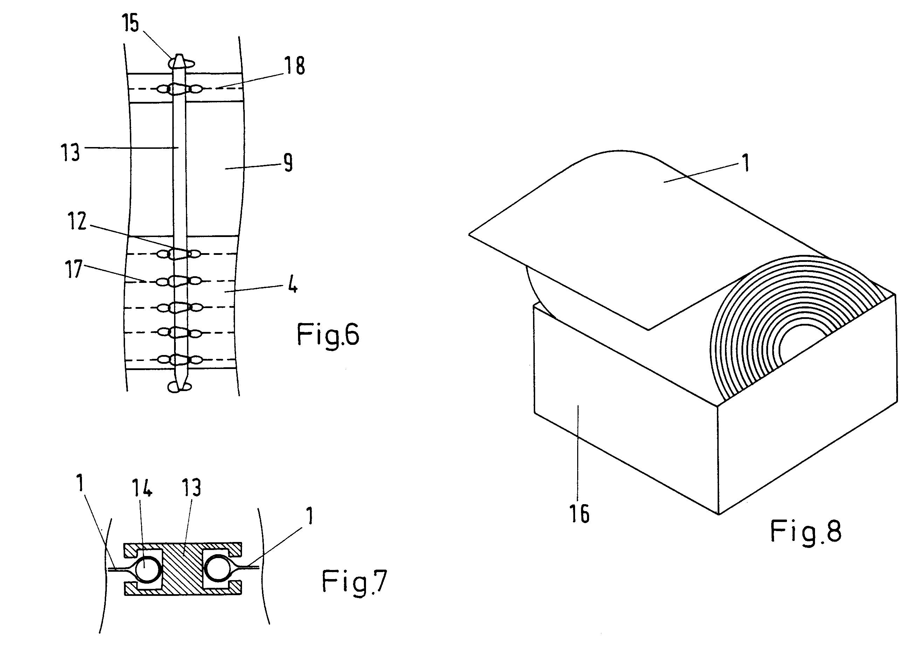

Entweder erfolgt hier die Verbindung mit einem Schleppfahrzeug oder aber die Karabiner 12 können in Ösen einer angrenzenden schwimmfähigen Sperre eingehakt werden, so wie es in Fig. 6 dargestellt ist. In diesem Falle werden zwei schwimmfähige Sperren zu einer entsprechend längeren miteinander verbunden.

Damit eine dichte Verbindung entsteht, wird senkrecht zu den Schleppseilen eine Schiene 13 aufgeschoben, die formschlüssig gehalten wird. Dieser Formschluß entsteht dadurch, daß in den Enden der miteinander zu verbindenden Sperrfolien 1 Stäbe 14 eingeschoben werden, so daß ein Wulst entsteht. An zwei angrenzende Wulste wird dann die Schiene 13 aufgeschoben, so wie es in Fig. 7 im Schnitt dargestellt ist. Es entsteht eine stabile und dichte Verbindung, die durch Karabiner 15 an den Enden gesichert ist, d.h. die Karabiner 15 verhindern ein unerwünschtes Verschieben der Schiene 13.

Im unteren Bereich 4 der schwimmfähigen Sperre, vorzugsweise an der unteren Kante, sind eine Anzahl von Öffnungen vorgesehen, die es ermöglichen, daß Wasser zwischen die doppellagige Sperrfolie eindringen kann, wenn sich die Sperre in Gebrauchslage befindet. Durch dieses eindringende Wasser wird die Sperre in ihrer Gebrauchslage stabilisiert.

Insgesamt ist die Ausführungsform nach den Fig. 4 bis 7 als leichter Einwegartikel ausgebildet. Er ist entsprechend preiswert.

Wie in Fig. 8 dargestellt, kann die schwimmfähige Sperre aufgerollt und in einem Transportbehälter 16 angeordnet werden. Vor Ort wird die Sperre abgerollt und steht zum Einsatz zur Verfügung.

## Patentansprüche

1. Schwimmfähige Öl- oder Chemikaliensperre mit einer in Gebrauchslage senkrecht im Wasser stehenden Sperrfolie (1), die im oberen Bereich einen in Längsrichtung verlaufenden Hohlraum (9) zur Aufnahme eines Schlauches mit einer Vielzahl von Luftkammern (2) aufweist, von denen mehrere zum Aufblasen durch eine Einlaßöffnung (6) miteinander verbunden, aber durch Rückschlag- oder Rückstauventile (8) voneinander getrennt sind.

2. Schwimmfähige Sperre nach Anspruch 1, dadurch gekennzeichnet, daß die Verbindung Zwischen den Luftkammern (2) und die Rückschlagventile durch ein Labyrinth (8) gebildet sind, das die Luft in Einblasrichtung hindurchläßt, eine Rückströmung aber verhindert.

3. Schwimmfähige Sperre nach Anspruch 1 oder 2, dadurch gekennzeichnet, daß unterhalb des Luftkammerschlauches (2) ein Schleppgurt (3) oder mehrere Schleppseile (17) parallel zu dem Hohlraum (9) verlaufend befestigt sind.

4. Schwimmfähige Sperre nach Anspruch 3, dadurch gekennzeichnet, daß der Schleppgurt (3) oder die Schleppseile (17) jeweils in einem in der doppellagigen Sperrfolie (1) ausgebildeten Kanal angeordnet sind.

5. Schwimmfähige Sperre nach einem oder mehreren der vorstehenden Ansprüche, dadurch gekennzeichnet, daß unten an der Sperrfolie (1) eine zusätzliche Beschwerung (5) befestigt oder durch die Schleppseile (17) gebildet ist.

6. Schwimmfähige Sperre nach einem oder mehreren der vorstehenden Ansprüche, dadurch gekennzeichnet, daß an den Enden des Schleppgurtes (3) oder der Schleppseile (17) Verbindungselemente (12) zur Verbindung mit entsprechenden Verbindungselementen (12) einer anschließenden Sperre vorgesehen sind.

7. Schwimmfähige Sperre nach einem oder mehreren der vorstehenden Ansprüche 1 bis 6, dadurch gekennzeichnet, daß die Sperrfolien (1) an einander anschließenden Sperren durch aufgeschobene Schienen (13) formschlüssig miteinander verbunden sind.

8. Schwimmfähige Sperre nach einem oder mehreren der vorstehenden Ansprüche 1 bis 7, dadurch gekennzeichnet, daß im unteren Bereich (9) der doppellagigen Sperrfolie (1) Öffnungen vorgesehen sind, die dem Eindringen von Wasser in der Gebrauchslage dienen.

9. Schwimmfähige Sperre nach einem oder mehreren der vorstehenden Ansprüche, gekennzeichnet durch die Anordnung durch Zick-Zack-Form (Fig. 3) oder durch Aufrollen (Fig. 8) in einem ggf. schwimmfähigen Behälter (10).
